# EUROPEAN PATENT APPLICATION

(11) **EP 2 641 639 A1**
(43) Date of publication of application: **25.09.2013**
(21) Application number: 12178266.8
(22) Date of filing: 27.07.2012
(51) Int. Cl.: A63F 13/00

(54) **Information processing apparatus, information processing program, information processing system and information processing method, capable of stereoscopic display**

(30) Priority: 23.03.2012 JP 2012066842
(71) Applicant: NINTENDO CO., LTD., Minami-ku Kyoto-shi Kyoto 601-8501 (JP)
(72) Inventor: Nitta, Masahiro, Kyoto-shi, Kyoto 601-8501 (JP); Ohta, Keizo, Kyoto-shi, Kyoto 601-8501 (JP)
(74) Representative: Grünecker, Kinkeldey, Stockmair & Schwanhäusser

(57) **Abstract**

An exemplary embodiment provides an information processing apparatus capable of stereoscopic display. The information processing apparatus includes: a display unit capable of stereoscopic display; first creating means (50) for successively creating an input image by periodically picking-up an image of a target object; second creating means (60, 64, 66; 70, 72) for creating a right-eye image and a left-eye image from the input image; and display control means (80) for presenting stereoscopic display on the display unit, using the right-eye image and the left-eye image.

## Description

### FIELD

The invention generally relates to an information processing apparatus, an information processing program, an information processing system and an information processing method, capable of stereoscopic display.

### BACKGROUND AND SUMMARY

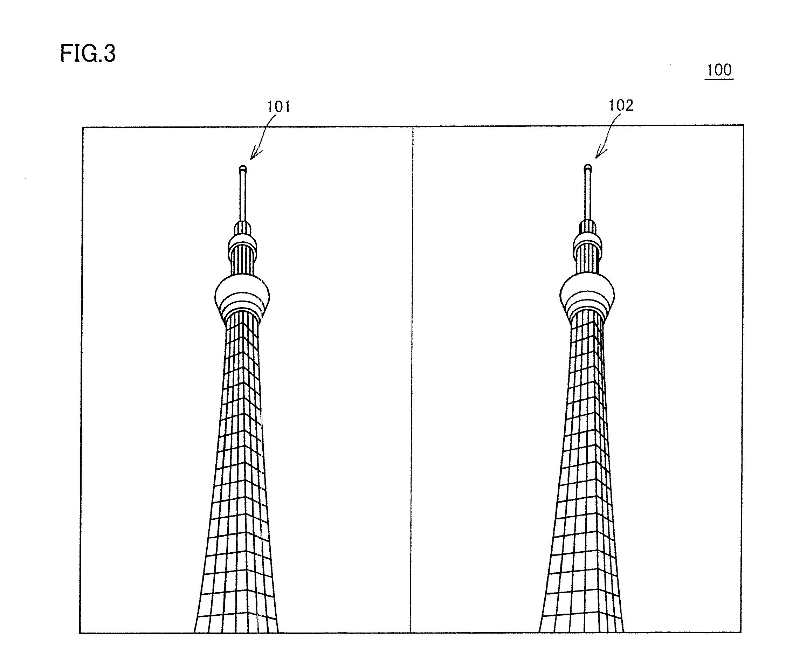

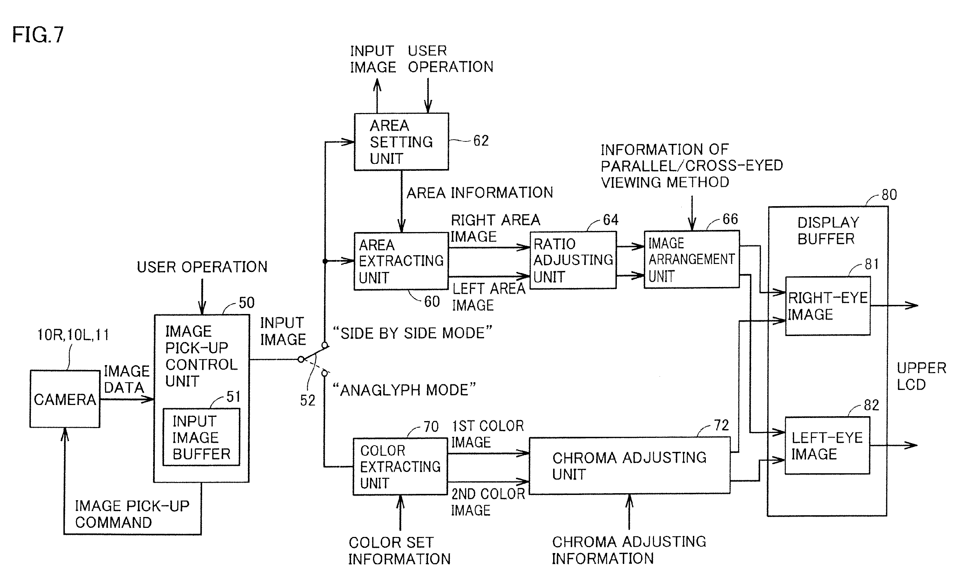

Conventionally, a television receiver capable of stereoscopic display has been practically utilized. By way of example, Japanese Patent Laying-Open No. 2011-250322 discloses a display device realizing 3D display by generating, from Side By Side type video signals and Top And Bottom type video signals, 3D video signals in accordance with the signal types (see Figs. 3 and 7 and corresponding descriptions).

If special video signals for stereoscopic display such as Side By Side or Top And Bottom type signals are used, the user must use a display device corresponding to such special video signals to enjoy the stereoscopic display. Even if the user has a display device corresponding to the special video signals, it is impossible to easily enjoy stereoscopic display using other materials.

Exemplary embodiments provide an information processing apparatus, an information processing program, an information processing system and an information processing method, that allow the user to easily enjoy stereoscopic display.

An exemplary embodiment provides an information processing apparatus, including: a display unit capable of stereoscopic display; first creating means for successively creating an input image by periodically picking-up an image of a target object; second creating means for creating a right-eye image and a left-eye image from the input image; and display control means for presenting stereoscopic display on the display unit, using the right-eye image and the left-eye image. According to the exemplary embodiment, one can enjoy stereoscopic display even if he/she does not have any display device corresponding to the special video signals for providing stereoscopic display.

In an exemplary embodiment, the second creating means is adapted to create the right-eye image and the left-eye image by extracting first and second areas of the input image. According to the exemplary embodiment, one can enjoy stereoscopic display using a material image having stereo images arranged next to each other on the same plane.

In an exemplary embodiment, the second creating means is adapted to create the right-eye image and the left-eye image from the first and second areas of the input image. In an exemplary embodiment, the right-eye image and the left-eye image corresponding to respective areas set in the input image can be created.

In an exemplary embodiment, the second creating means is adapted to set the first and second areas not to overlap with each other. The exemplary embodiment is suitable for viewing stereoscopic video images of a material image in accordance with parallel viewing method/cross-eyed viewing method.

In an exemplary embodiment, each of the first and second areas is set at least on a part of respective partial areas obtained by dividing the input image into two. According to the exemplary embodiment, the process for creating images necessary for stereoscopic display can be simplified for a material image having stereo images arranged next to each other on the same plane.

In an exemplary embodiment, the first and second areas are set to have the same shape. According to the exemplary embodiment, parallax between images represented by the material can be maintained.

In an exemplary embodiment, the information processing apparatus further includes input means for displaying the input image and receiving setting of scopes of the first and second areas on the displayed input image; and the second creating means is adapted to change the scopes for creating the right-eye image and the left-eye image in accordance with the setting received by the input means. According to the exemplary embodiment, the user can easily set the scopes from which the right-eye image and the left-eye image are to be created, while viewing the result of image pick-up of the material image.

In an exemplary embodiment, the target object includes an image having a first image presenting an object from a first point of view and a second image representing the object from a second point of view other than the first point of view, arranged next to each other on one plane.

In an exemplary embodiment, the second creating means is adapted to generate the right-eye image and the left-eye image by respectively extracting first and second color components included in the input image. In an exemplary embodiment, stereoscopic display from a material image represented in separate color components, such as anaglyph images, becomes possible.

In an exemplary embodiment, the first and second color components are selected to be complementary colors to each other.

In an exemplary embodiment, the information processing apparatus further includes adjusting means for adjusting chroma of the right-eye image and the left-eye image. According to the exemplary embodiment, burden on the user viewing the stereoscopic display can be alleviated.

In an exemplary embodiment, the target object includes an image having a first image presenting an object from a first point of view mainly in the first color component and a second image representing the object from a second point of view other than the first point of view mainly in the second color component, arranged overlapped on one plane.

In an exemplary embodiment, the information processing apparatus is configured to be portable. According to the exemplary embodiment, the user can easily enjoy the stereoscopic display.

An exemplary embodiment provides an information processing program executed by a computer having a display unit capable of stereoscopic display. The information processing program is adapted to cause the computer to execute: the first creating step of successively creating an input image by periodically picking-up an image of a target object; the second creating step of creating a right-eye image and a left-eye image from the input image; and the display step of presenting stereoscopic display on the display unit, using the right-eye image and the left-eye image.

An exemplary embodiment provides an information processing system including: a display device capable of stereoscopic display; first creating means for successively creating an input image by periodically picking-up an image of a target object; second creating means for creating a right-eye image and a left-eye image from the input image; and display control means for presenting stereoscopic display on the display unit, using the right-eye image and the left-eye image.

An exemplary embodiment provides an information processing method executed by a computer having a display unit capable of stereoscopic display. The information processing method includes: the first creating step of successively creating an input image by periodically picking-up an image of a target object; the second creating step of creating a right-eye image and a left-eye image from the input image; and the display step of presenting stereoscopic display on the display unit, using the right-eye image and the left-eye image.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 shows an exemplary illustrative non-limiting front view (open state) of an exemplary non-limiting game machine according to an exemplary embodiment.
Fig. 2 shows an exemplary illustrative non-limiting front view (closed state) of an exemplary non-limiting game machine according to an exemplary embodiment.
Fig. 3 shows an exemplary illustrative non-limiting material image for stereoscopic video image in accordance with the parallel viewing method/cross-eyed viewing method.
Fig. 4 shows an exemplary illustrative non-limiting material image for stereoscopic video image in accordance with the anaglyph method.
Fig. 5 shows an exemplary illustrative non-limiting usage when stereoscopic display is enjoyed using the game machine according to an exemplary embodiment.
Fig. 6 shows an exemplary illustrative non-limiting hardware configuration of the game machine according to an exemplary embodiment.
Fig. 7 shows an exemplary illustrative non-limiting control structure of the game machine according to an exemplary embodiment.
Fig. 8 shows an exemplary illustrative non-limiting user interface for setting right-rectangular and left-rectangular areas in the game machine according to an exemplary embodiment.
Fig. 9 shows an exemplary illustrative non-limiting flowchart illustrating the process steps related to the stereoscopic display executed by the game machine according to an exemplary embodiment.

### DETAILED DESCRIPTION OF NON-LIMITING EXAMPLE EMBODIMENTS

Embodiments will be described in detail with reference to the figures. The same or corresponding portions in the figures will be denoted by the same reference characters and description thereof will not be repeated.

### <A. Overall Configuration>

An information processing apparatus in accordance with a typical embodiment is implemented as a portable game machine. The game machine of the present embodiment is a computer having a processor and the like mounted thereon, and it has a display unit (display device) capable of stereoscopic display.

The information processing apparatus in accordance with another embodiment is implemented as a personal computer, a portable telephone, a smart phone, a PDA (Personal Digital Assistance), a digital camera or the like.

A still further embodiment implements an information processing program for controlling a computer having a display device capable of stereoscopic display. A still further embodiment implements an information processing system including a display device capable of displaying stereoscopic display, and a controlling body that can use the display device. A yet further embodiment implements an information processing method executed by a display device capable of stereoscopic display, an image pick-up device, and a controlling body that can use the display device and the image pick-up device, in cooperation with each other.

In the following, a configuration of a typical example implemented as a portable game machine will be described.

### <B. Appearance of Game Machine>

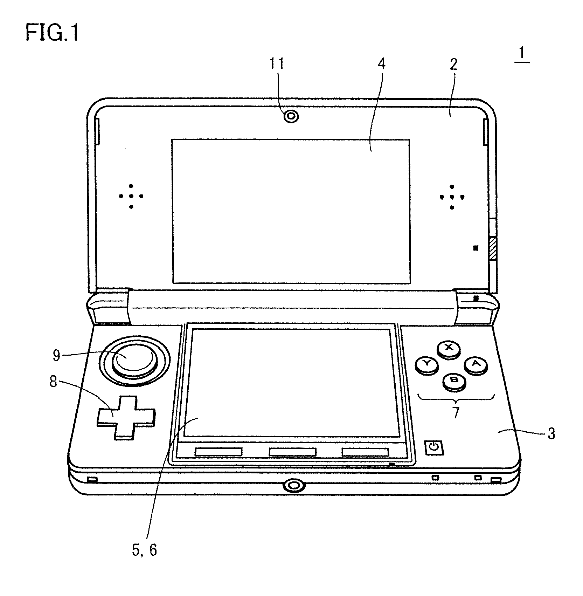

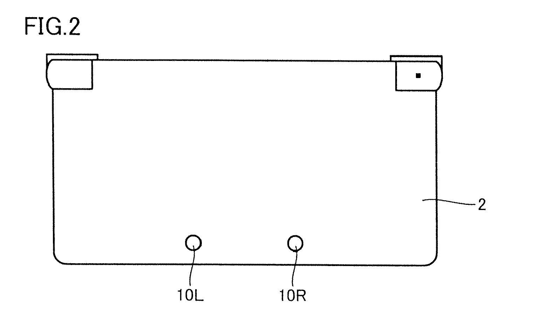

Referring to Figs. 1 and 2, an appearance of a game machine 1 in accordance with the present embodiment will be described.

As shown in Figs. 1 and 2, game machine 1 has an upper housing 2 and a lower housing 3, formed to be foldable, and has an appropriate size to be portable by a user. Specifically, game machine 1 can be held by both hands or by one hand of the user both in the opened and closed states.

On upper housing 2, an LCD (Liquid Crystal Display) 4 is provided as a display unit (display device) capable of stereoscopic display. As a specific example of upper LCD 4, a parallax barrier type display device may be adopted. As an alternative, a lenticular type or active shutter glasses type (time-divisional) display device may be adopted. As will be described later, as right-eye and left-eye images are provided on upper LCD 4, a stereoscopic image is presented to the user.

On lower housing 3, a lower LCD 5 is provided as a display unit (display device). Though a display device capable of stereoscopic display may be adopted as lower LCD 5, in the present embodiment, a device capable of non-stereoscopic (planar) display of objects and various pieces of information is sufficient. Therefore, a common display device is used. Further, in association with lower LCD 5, a touch panel 6 is provided as an input unit (input means). Typically, a resistive or capacitance type pointing device is adopted as touch-panel 6.

On lower housing 3, a group of buttons 7, a cross button 8, and a control pad 9 are provided as operation unit (operating means) allowing the user to carry out various operations. Further, a power button and buttons for other operations are provided.

Game machine 1 has an inner camera 11 (see Fig. 1) and outer cameras 10R and 10L (see Fig. 2) as image pick-up devices (image pick-up means) for picking up an image of a target object, provided on upper housing 2. As will be described later, game machine 1 provides stereoscopic display on upper LCD 4, using input images created by image pick-up by any of the cameras. Though outer cameras 10R and 10L are capable of functioning as so-called stereoscopic cameras, when the function of stereoscopic display in accordance with the present embodiment is to be executed, only one of outer cameras 10R and 10L is activated.

### <C. Outline of Stereoscopic Display Function>

Next, outline of the stereoscopic display function in accordance with the present embodiment will be described.

The stereoscopic display function of the present embodiment utilizes the camera (outer camera 10R, outer camera 10L or inner camera 11) mounted on game machine 1 and the display unit (upper LCD 4) capable of stereoscopic display, to present the stereoscopic display to the user. More specifically, game machine 1 picks up images of a target object periodically by the camera and thereby successively creates input images (images for two-dimensional display), and from the input images, creates right-eye and left-eye images. Using the thus created right-eye and left-eye images (images for stereoscopic display), stereoscopic display is given on upper LCD 4.

As the target object of which stereoscopic display is to be provided, materials for stereoscopic video images are considered.

Material image 100 of stereoscopic video image in accordance with parallel viewing method/cross-eyed viewing method shown in Fig. 3 is prepared by placing side-by-side stereo images (right-eye image and left-eye image) created by picking-up images of an object by two cameras with different points of view (stereoscopic image pick-up). Specifically, in material image 100 as the target object picked-up by the camera on game machine 1, a first image 101 representing an object from a first point of view and a second image 102 representing the object from a second point of view other than the first point of view are arranged side by side on one plane. As to the method of arranging the stereo images (right-eye image and left-eye image), typically, a parallel viewing method and cross-eyed viewing method have been known, and material image 100 is prepared in accordance with either one of the methods.

According to the parallel viewing method, parallax is given such that when the user views the second image 102 arranged on the right side of material image 100 with his/her right eye and views the first image 101 arranged on the left side of material image 100 with his/her left eye, stereoscopic display is realized. Specifically, in material image 100 prepared in accordance with the parallel viewing method, the left-eye image is placed on the left side and the right-eye image is placed on the right side when viewed from the user.

In contrast, according to the cross-eyed viewing method, parallax is given such that when the user views the first image arranged on the left side of the material image with his/her right eye, and views the second image arranged on the right side of the material image with his/her left eye, stereoscopic display is realized. Specifically, in material image 100 prepared in accordance with the cross-eyed viewing method, the left-eye image is placed on the right side and the right-eye image is placed on the left side when viewed from the user. Since states viewed by respective eyes of the user differ in the parallel viewing method and the cross-eyed viewing method, the first images for these methods are different from each other and the second images are different from each other.

In the parallel viewing method or cross-eyed viewing method, Side By Side arrangement is adopted in which the images are arranged in the lateral direction when viewed by the user. It is also possible, however, to adopt Top And Bottom arrangement in which the images are arranged in the lengthwise direction.

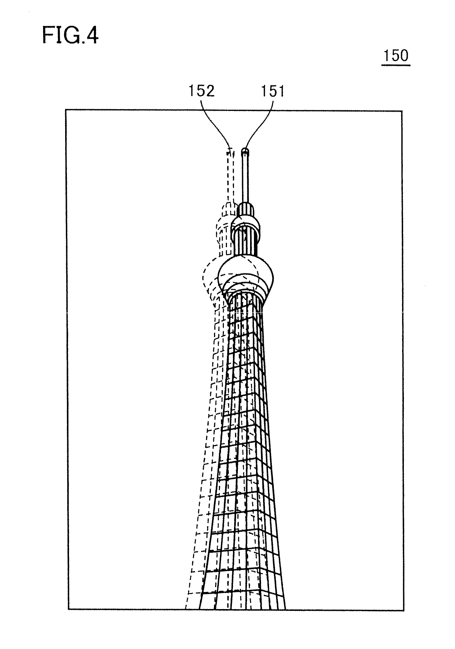

Fig. 4 shows a material image 150 for anaglyph type stereoscopic video image, in which the right-eye image and the left-eye image are combined to form one image, with each image represented separately in different color components (in separate color components). By using glasses corresponding to the different colors, the user can enjoy the stereoscopic display. For convenience of description, in Fig. 4, one color is expressed by a solid line and the other color is expressed by a dotted line. Specifically, in material image 150 as the target object to be picked-up by the camera on game machine 1, a first image 151 representing the object viewed from a first point of view mainly by a first color component and a second image 152 representing the object viewed from a second point of view mainly by a second color component are arranged overlapped with each other on one plane.

It is preferred that the two colors (first and second color components) used for the anaglyph image are selected to be complementary colors to each other. In RGB/CMY color system, combinations of (1) red (R) and blue-green (cyan)(C), (2) green (G) and purple (magenta)(M), and (3) blue (B) and yellow (Y) may be possible.

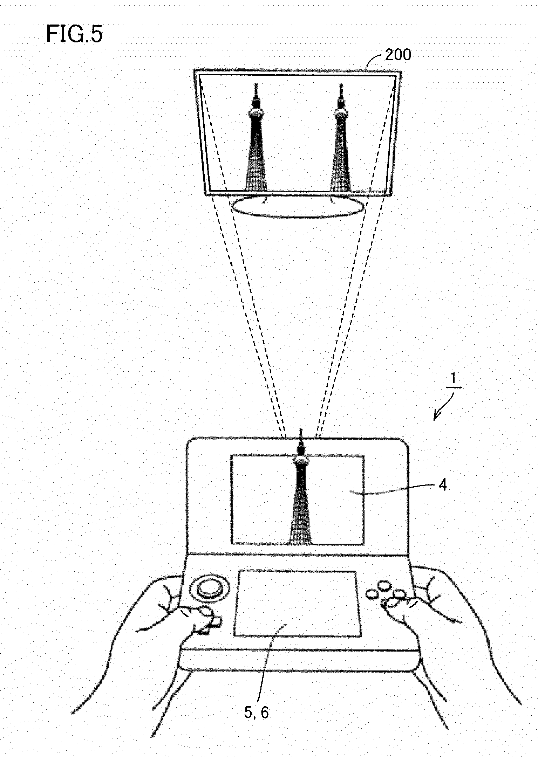

Fig. 5 shows an example of use when game machine 1 is used for enjoying the stereoscopic image. Fig. 5 shows an example in which Side By Side type video signals are input to a television receiver 200 not capable of stereoscopic display. When the user picks up the display screen of television receiver 200 as the target object using outer camera 10R or 10L on game machine 1, a process, which will be described later, is executed, whereby right-eye and left-eye images are created from the material image displayed on the display screen of television receiver 200. Using the thus created right-eye and left-eye images, the contents of object included in the target object is stereoscopically displayed on upper LCD 4.

When material image 100 shown in Fig. 3 is picked-up using the camera on game machine 1, such a stereoscopic display as shown in Fig. 5 is given. Further, when material image 150 as the anaglyph image shown in Fig. 4 is picked-up, similarly, such a stereoscopic display as shown in Fig. 5 is given.

The stereoscopic display function according to the present embodiment is capable of executing the process for presenting the stereoscopic display from the stereoscopic video image materials such as shown in Figs. 3 and 5, and the process for presenting the stereoscopic display from the stereoscopic video image material such as the anaglyph image shown in Fig. 4. In the following, for convenience of description, the first process will be referred to as "Side By Side Mode," and the latter will be referred to as "Anaglyph Mode." The name "Side By Side" is just for convenience and it is clearly understood that the process can be applied to a material in which the right-eye image and the left-eye image are arranged in the vertical direction as in the Top And Bottom arrangement.

### <D. Game Machine Hardware Configuration>

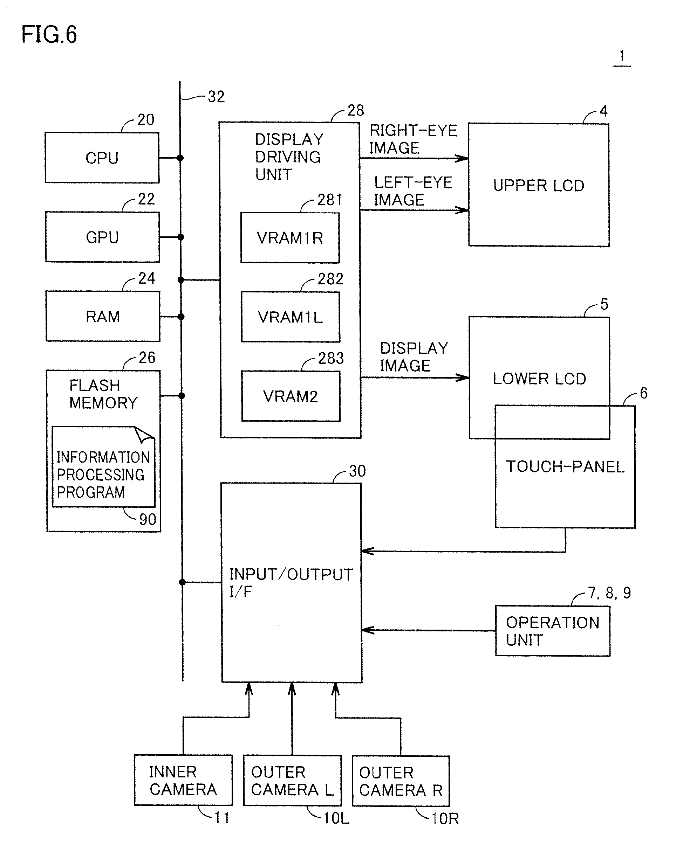

Next, referring to Fig. 6, hardware configuration of game machine 1 in accordance with the present embodiment will be described.

Game machine 1 includes, as main hardware, a CPU (Central Processing Unit) 20, a GPU (Graphical Processing Unit) 22, an RAM (Random Access Memory) 24, a flash memory 26, a display driving unit 28, and an input/output interface (I/F) 30. These components are connected to each other by means of a bus 32.

CPU 20 is a processor serving as a main processing body, for executing various control operations in game machine 1. GPU 22 executes, in cooperation with CPU 20, processes necessary for display on upper LCD 4 and lower LCD 5. RAM 24 functions as a working memory for storing parameters and data necessary for CPU 20 and GPU 22 to execute programs. Flash memory 26 stores an information processing program 90 executed by CPU 20 and various parameters set by the user, in non-volatile manner.

Display driving unit 28 issues driving commands for displaying images on upper LCD 4 and lower LCD 5. Display driving unit 28 applies signals for displaying the right-eye and left-eye images to upper LCD 4 capable of stereoscopic display, and applies a signal for displaying a display image to lower LCD 5. Display driving unit 28 includes VRAMs (Video Random Access Memories) 281 and 282 (VRAM 1R and VRAM 1L) for temporarily storing data representing the right-eye and left-eye images to be applied to upper LCD 4 and a VRAM 283 (VRM2) for temporarily storing data representing the display image to be applied to lower LCD 5, in accordance with, for example, a rendering instruction from CPU 20 and/or GPU 22.

Input/output interface 30 receives user operations through touch-panel 6 and operation unit (group of buttons 7, cross button 8 and/or control pad 9) as the input unit (input means), and outputs the contents of operations to CPU 20. Further, input/output interface 30 receives image data picked-up by outer cameras 10R and 10L as well as inner camera 11, and outputs the image data to CPU 20. Further, input/output interface 30 is connected to an indicator, a speaker and the like, not shown, and provides light and sound to the user.

Outer cameras 10R and 10L and inner camera 11 include an image pick-up device such as a CCD (Charge Coupled Device) and a CMOS image sensor, and a peripheral circuit for reading image data acquired by the image pick-up device.

### <E. Game Machine Control Structure>

Next, referring to Fig. 7, a control structure for realizing the stereoscopic display function of game machine 1 in accordance with the present embodiment will be described.

### (e1: Overall Structure>

Game machine 1 includes, as its control structure, an image pick-up control unit 50, a selector 52, an area extracting unit 60, an area setting unit 62, a ratio adjusting unit 64, an image arrangement unit 66, a color extracting unit 70, a chroma adjusting unit 72, and a display buffer 80. These functional modules are typically realized by CPU 20 of game machine 1 executing information processing program 90 utilizing physical components such as GPU 22, RAM 24, flash memory 26 and input/output interface 30.

Of these functional modules, area extracting unit 60, area setting unit 62, ratio adjusting unit 64 and image arrangement unit 66 are activated mainly when the Side By Side Mode is selected. Color extracting unit 70 and chroma adjusting unit 72 are activated mainly when the Anaglyph Mode is selected. On the other hand, image pick-up control unit 50, selector 52 and display buffer 80 are commonly used.

At the time of actual use, in accordance with the material image for the stereoscopic video image, the user selects the Side By Side Mode or the Anaglyph Mode. Then functional modules corresponding to respective modes are activated, the right-eye and left-eye images are created from input images picked-up by any of the cameras 10R, 10L and 11, and output to upper LED 4, whereby stereoscopic display is realized.

In the following, contents of processing by each of the functional modules will be described.

### (e2: Image Pick-up Process)

Image pick-up control unit 50 applies an image pick-up command to the selected one of cameras 10R, 10L and 11 and thereby activates the camera, in response to a user operation. Then, image pick-up control unit 50 stores image data created by the selected camera picking-up the target object, in an internal input image buffer 51.

Basically, the image pick-up by the camera is repeated periodically. As the process, which will be described later, is executed every time the image data is input, the stereoscopic display created from the target object picked-up by the camera comes to be updated on real-time basis. Specifically, the selected camera and image pick-up control unit 50 function as creating means for successively creating input images, by periodically picking-up the image of target object.

When the image data stored in input image buffer 51 is output as the input image, selector 52 outputs the input image to area extracting unit 60 or color extracting unit 70, in accordance with the mode selected by the user.

### (e3: Side By Side Mode)

If the Side By Side Mode is selected, the input image created by image pick-up control unit 50 is input from input image buffer 51 to area extracting unit 60, and creation of the right-eye image and left-eye image starts. Specifically, area extracting unit 60, ratio adjusting unit 64 and image arrangement unit 66 function as creating means for creating the right-eye and left-eye images from the input image.

Area extracting unit 60 extracts a right rectangular area and a left rectangular area from the input image and thereby creates the right area image and a left area image. The right area image and the left area image are subjected to processes executed by ratio adjusting unit 64 and image arrangement unit 66 as will be described later, and output as the right-eye image and the left-eye image. Therefore, the scope output as the right-eye image and the left-eye image is determined by the right rectangular area and the left rectangular area. Specifically, area extracting unit 60 creates the right-eye image and the left-eye image from the right rectangular area and the left rectangular area of the input image, respectively.

More specifically, based on coordinate values indicating the scope of set right and left rectangular areas, area extracting unit 60 extracts a part of the input image (partial image) in the rectangular area defined by the coordinate values. Namely, the right rectangular image and the left rectangular image are partial images of the input image.

The shape, size and position of the right and left rectangular areas set in the input image may be determined in accordance with pre-set default values, or may be arbitrarily set by the user.

As described with reference to Figs. 3 and 5, the material image picked-up in the Side By Side Mode basically has stereo images arranged side by side. Therefore, using a border line set on the input image as the center, the right rectangular area and the left rectangular area may be set in symmetry. As the simplest approach, partial images obtained by dividing the input image into two (halves) may be output as the right area image and the left area image. Alternatively, part of the partial images obtained by dividing the input image into two (halves) may be output as the right area image and the left area image. Specifically, each of the right and left rectangular areas may be set on at least a part of the partial images obtained by dividing the input image into two.

In order to maintain parallax (corresponding relation between pixels) set on the stereo image, it is preferred that the right and left rectangular areas are set to have the same shape (same size). Further, it is preferred that the right and left rectangular areas are set not to overlap with each other.

It is preferred that the shape, size and position of right and left rectangular areas can be set by the user in an interactive manner. For this purpose, area setting unit 62 provides two-dimensional display of the input image on lower LCD 5, and receives setting of the scope of right and left rectangular areas on the displayed input image. The scope set by the user received by area setting unit 62 is output to area extracting unit 60. Area extracting unit 60 changes the scope from which the right area image (right-eye image) and the left area image (left-eye image) are created, in accordance with the setting received by area setting unit 62.

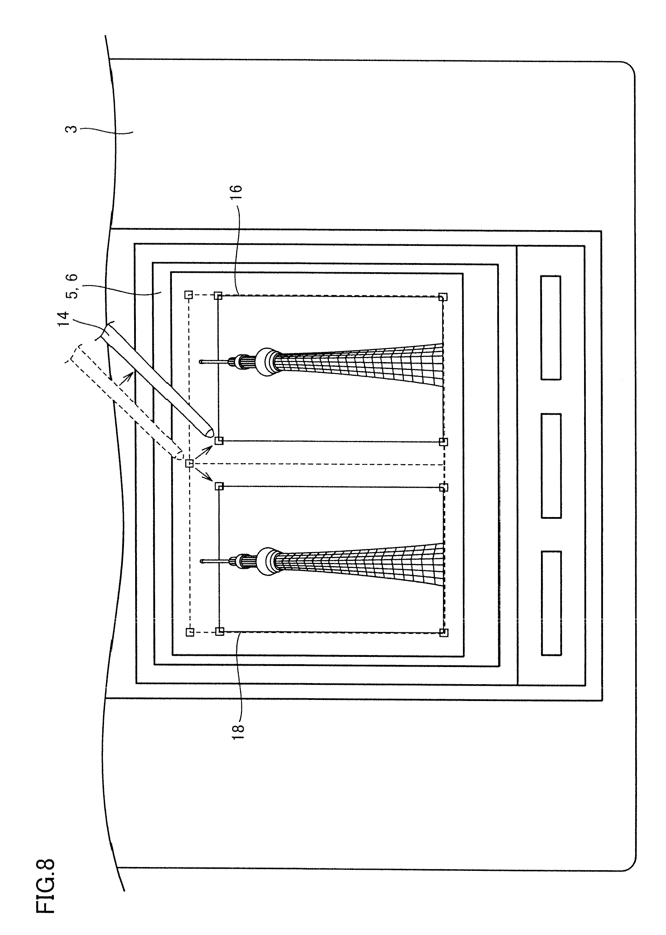

As shown in Fig. 8, the input image created by image pick-up of a target object (material for stereoscopic video image) by a camera is displayed on lower LCD 5, and display frames 16 and 18 indicating the set right and left rectangular areas are displayed overlapped on the input image. If the user performs an operation of changing display frame 16 or 18, the set right and left rectangular areas are changed in a linked manner.

Specifically, on the user interface shown in Fig. 8, the input image created by the camera is displayed in non-stereoscopic manner (planar display), and a pair of rectangular areas output as the right-eye and left-eye images are displayed, allowing a change thereto.

Display frames 16 and 18 shown in Fig. 8 have operable points at four corners. When the user drags any of the handling points using, for example, a stylus pen, the shape of display frame 16 and 18 is changed linked to each other. Here, in order to keep the shape and/or size of the right and left rectangular areas identical, if an operation is done on either one of display frame 16 or 18, the shape (size) of the other display frame is also changed. More specifically, using the central axis in the left-right direction of lower LCD 5 as the center, display frames 16 and 18 have their shape (size) changed symmetrically.

The right and left area images extracted from the input image by the above-described process are output to ratio adjusting unit 64. Ratio adjusting unit 64 is for adjusting the aspect ratio and the overall size of input right and left area images. By way of example, in Side By Side type video signals, the right-eye and left-eye images to be displayed originally are each compressed to 1/2 and, therefore, ratio adjusting unit 64 performs the process of recovering the images of the original ratio.

The right and left area images adjusted by ratio adjusting unit 64 are output to image arrangement unit 66. Image arrangement unit 66 determines arrangement of the images to be eventually output as the right-eye and left-eye images, in response to a piece of information from the user indicating whether the material image for the stereoscopic video image picked-up by the camera is formed in accordance with the parallel viewing method or the cross-eyed viewing method.

More specifically, if the material image for the stereoscopic video image is formed in accordance with the parallel viewing method, image arrangement unit 66 outputs the adjusted right area image as the right-eye image, and outputs the adjusted left area image as the left-eye image. In contrast, if the material image for the stereoscopic video image is formed in accordance with the cross-eyed viewing method, image arrangement unit 66 outputs the adjusted left area image as the right-eye image and outputs the adjusted right area image as the left-eye image. Specifically, if the cross-eyed viewing method is designated, image arrangement unit 66 switches the order of arrangement of right and left area images.

The right-eye and left-eye images output from image arrangement unit 66 are stored in a right-eye display buffer 81 and a left-eye display buffer 82 of display buffer 80, respectively.

If there is any misalignment between the material image for the stereoscopic video image and the camera position, the input image would be distorted. In that case, a characteristic region or the like included in the material image may be detected and a process to correct distortion of the input image may be done as a pre-processing.

By way of example, if the material image has a positioning mark, image processing may be done based on the positioning mark, so that the right and left rectangular areas can be set on the input image automatically.

Further, because of optical distortion of the camera or distortion in the material image, corresponding relation between the right-eye and left-eye images may be affected. In such a case, it would be helpful if the user can finely adjust the scope to be output as the right-eye and left-eye images, that is, the set right and left rectangular areas. Alternatively, the fine adjustment may also be automatically done through image processing.

### (e4: Anaglyph Mode)

If the Anaglyph Mode is selected, the input image created by image pick-up control unit 50 is input from input image buffer 51 to color extracting unit 70, and creation of the right-eye and left-eye images starts. Specifically, color extracting unit 70 and chroma adjusting unit 72 function as creating means for creating the right-eye and left-eye images from the input image.

Color extracting unit 70 extracts the first and second color components included in the input image to create the first and second color images, respectively. The first and second color images are subjected to a process by chroma adjusting unit 72 as will be described later, and then, output as the right-eye and left-eye images.

More specifically, the input image includes information representing gradation value of each color of each pixel. Typically, the input image has information of (Ri, Gi, Bi) of i-th pixel. Here, (Ri, Gi, Bi) represent the density (gradation value) of red, density (gradation value) of green and density (gradation value) of blue.

For instance, if the material image for the stereoscopic video image is an anaglyph image represented by the combination of red and blue-green (cyan), color extracting unit 70 first extracts red component of each pixel of the input image as the first color component and creates the first color image. The first color image contains the information (Ri, 0, 0) for the i-th pixel. Next, color extracting unit 70 extracts the green and blue components of each pixel of the input image as the second color component, and creates the second color image. The second color image contains the information (0, Gi, Bi) for the i-th pixel.

The first and second color images extracted from the input image by the above-described process are output to chroma adjusting unit 72. The chroma adjusting unit 72 adjusts chroma of the first and second color images. The reason for this is as follows. In the Anaglyph Mode, the extracted first and second color images are, for example, of red and green and have the relation of complementary colors. Namely, the colors of the first and second color images may be very much different. Therefore, depending on the type of material image, viewing such images may be stressful to the user's eyes. Therefore, chroma adjusting unit 72 adjusts the chroma of first and second color images such that the chroma of output right-eye image and chroma of output left-eye image are as close as possible to each other.

More specifically, the user can input an instruction to adjust chroma, through the operation unit of game machine 1. Chroma adjusting unit 72 adjusts chroma of the first and second color images in accordance with the chroma adjusting information. If it is instructed to maintain the chroma as high as possible, chroma adjusting unit 72 outputs the input first and second color images directly as the right-eye and left-eye images. On the contrary, if it is instructed to decrease the chroma, chroma adjusting unit 72 converts the red component of first color image to a monochrome component, converts the green and blue components of the second color image to monochrome components, and outputs the resulting images as the right-eye and left-eye images.

An example of the process for monochrome conversion will be described. Assume, for example, that the i-th pixel of the first color image has the gradation value of (Ri, Gi, Bi) = (100, 0, 0). For the i-th pixel of the first color image, the green component and the blue component are gradually increased from (100, 0, 0) → (100, 50, 50) → (100, 100, 100), to make chroma lower. Further, assume that the i-th pixel of the second color image has the gradation value of (Ri, Gi, Bi) = (0, 50, 100). For the i-th pixel of the second color image, the red component is gradually increased from (0, 50, 100) → (20, 70, 98) → (90, 90, 90), to make chroma lower.

It is preferred that the brightness of the first and second color images after adjustment should preferably be well balanced. For this purpose, the amount of increase/decrease of red, green and blue components should be adjusted appropriately, in consideration of human luminosity factor.

The right-eye and left-eye images output from chroma adjusting unit 72 are stored in right-eye display buffer 81 and left-eye display buffer 82 of display buffer 80, respectively.

### (e5: Image Output Process)

Display buffer 80 successively outputs the right-eye and left-eye images stored in right-eye display buffer 81 and left-eye display buffer 82, respectively, to upper LCD 4. Thus, stereoscopic display is provided on upper LCD 4. Specifically, display buffer 80 functions as display control means for providing the stereoscopic display on upper LCD as the display unit, using the right-eye and left-eye images.

### <F. Process Steps>

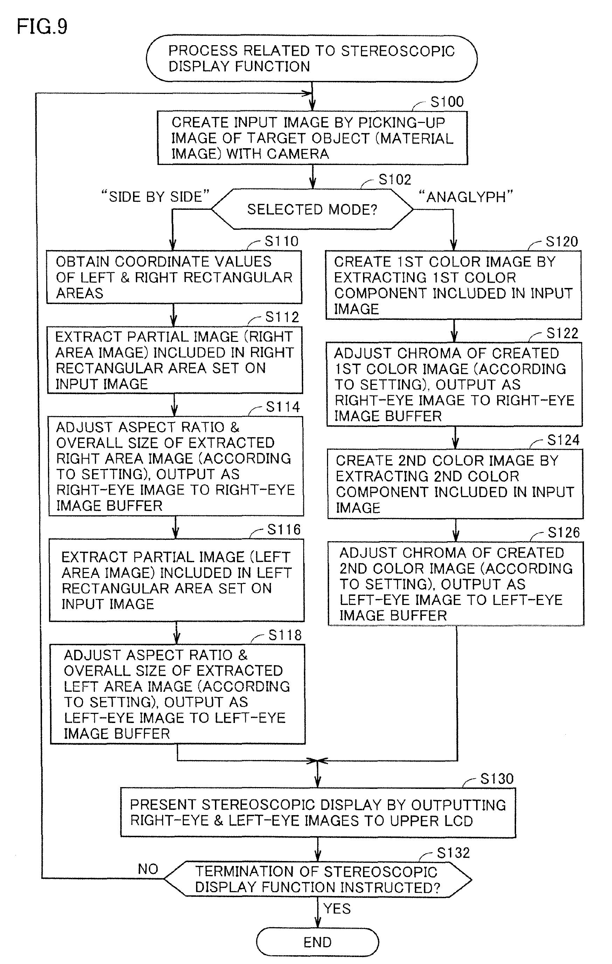

Next, referring to Fig. 9, the process steps related to the stereoscopic display function in accordance with the present embodiment will be described.

The process steps shown in Fig. 9 are typically realized by CPU 20 of game machine 1 executing a program. The program executed by game machine 1 may not be a single program, and it may be executed utilizing, for example, a library provided by the OS (Operating System).

Referring to Fig. 9, CPU 20 of game machine 1 creates the input image by picking-up an image of the target object (material image) using the selected camera (step S 100). Thereafter, GPU 22 of game machine 1 determines the selected mode (step S102).

If Side By Side Mode is selected ("Side By Side" at step S102), CPU 20 of game machine 1 obtains coordinate values of right and left rectangular areas that are pre-set or set by the user (step S110).

Then, CPU 20 of game machine 1 extracts a partial image (right area image) included in the right rectangular area set for the input image (step S112). Thereafter, CPU 20 of game machine 1 adjusts the aspect ratio and overall size of the extracted right area image (in accordance with setting), and outputs the result as the right-eye image to right-eye display buffer 81 (step S 114).

After or in parallel with the execution of steps S112 and S114, CPU 20 of game machine 1 extracts a partial image (left area image) included in the left rectangular image set for the input image (step S116). Thereafter, GPU 22 of game machine 1 adjusts the aspect ratio and overall size of the extracted left area image (in accordance with setting), and outputs the result as the left-eye image to left-eye display buffer 82 (step S118). Then, the process of step S130 is executed.

If cross-eyed viewing method is selected, at steps S 114 and S 118, the adjusted right and left area images are switched and output to the left-eye display buffer 82 and right-eye display buffer 81, respectively.

Returning to step S 102, if the Anaglyph Mode is selected ("Anaglyph Mode" at step S102), CPU 20 of game machine 1 extracts the first color component of the input image and creates the first color image (step S120).

Thereafter, GPU 22 of game machine 1 adjusts the chroma of created first color image (in accordance with setting), and outputs the result as the right-eye image to right-eye display buffer 81 (step S122).

After or in parallel with the execution of steps S 120 and S122, CPU 20 of game machine 1 extracts the second color component of the input image and creates the second color image (step S124). Thereafter, GPU 22 of game machine 1 adjusts the chroma of created second color image (in accordance with setting), and outputs the result as the left-eye image to left-eye display buffer 82 (step S126). Then, the process of step S 130 is executed.

At step 130, GPU 22 of game machine 1 outputs the right-eye and left-eye images written to right-eye and left-eye display buffers 81 and 82, respectively, to upper LCD 4, and thereby provides stereoscopic display (step S 130). Then, CPU 20 of game machine 1 determines whether or not the termination of stereoscopic display function has been instructed (step S 132). If termination of stereoscopic display function is not instructed (NO at step S 132), the process steps following step S100 are repeated.

On the contrary, if termination of stereoscopic display function is instructed (YES at step S 132), the process is terminated.

### <G. Other Embodiments>

In addition to the configurations described above, the following embodiments may be adopted.

### (1) The image pick-up device (image pick-up means) and the display device (display unit) are provided as separate bodies.

Though cameras as the image pick-up device and the display device capable of stereoscopic display are mounted in one housing in game machine 1 described above, these may be provided as separate bodies.

### (2) Adjustment of stereoscopic effect

In place of presenting the right-eye and left-eye images created by game machine 1 described above directly as they are on upper LCD 4, adjustment of stereoscopic effect may be made possible by shifting relative positions at which these images are presented.

### (3) Application to multi-view-point image

With respect to game machine 1 above, description has been given mainly using a material image for stereoscopic display as an example. The technique, however, is also applicable to a multi-view-point image obtained by picking-up images of a target object by a plurality of cameras with prescribed parallaxes. By way of example, the present embodiment is applicable to a panorama image having a plurality of images obtained by picking-up and connecting images of different fields of view.

While certain example systems, methods, devices and apparatuses have been described herein, it is to be understood that the appended claims are not to be limited to the systems, methods, devices and apparatuses disclosed, but on the contrary, are intended to cover various modifications and equivalent arrangements included within the spirit and scope of the appended claims.

## Claims

1. An information processing apparatus (1), comprising:
a display unit (4) capable of stereoscopic display;
first creating means (50) for successively creating an input image by periodically picking-up an image of a target object;
second creating means (60, 64, 66; 70, 72) for creating a right-eye image and a left-eye image from said input image; and
display control means (80) for presenting stereoscopic display on said display unit, using said right-eye image and said left-eye image.

2. The information processing apparatus according to claim 1, wherein
said second creating means is adapted to create said right-eye image and said left-eye image by extracting first and second areas of said input image.

3. The information processing apparatus according to claim 2, wherein
said second creating means is adapted to create said right-eye image and said left-eye image from said first and second areas of said input image.

4. The information processing apparatus according to claim 2 or 3, wherein
said second creating means is adapted to set said first and second areas not to overlap with each other.

5. The information processing apparatus according to any one of claims 2 to 4, wherein
each of said first and second areas is set at least on a part of respective partial areas obtained by dividing said input image into two.

6. The information processing apparatus according to any one of claims 2 to 5, wherein
said first and second areas are set to have the same shape.

7. The information processing apparatus according to any one of claims 2 to 6, further comprising
input means (5;6) for displaying said input image and receiving setting of scopes of said first and second areas on the displayed input image; wherein
said second creating means is adapted to change the scopes for creating said right-eye image and said left-eye image in accordance with the setting received by said input means.

8. The information processing apparatus according to any one of claims 1 to 7, wherein
said target object includes an image having a first image presenting an object from a first point of view and a second image representing said object from a second point of view other than said first point of view, arranged next to each other on one plane.

9. The information processing apparatus according to claim 1, wherein
said second creating means is adapted to generate said right-eye image and said left-eye image by respectively extracting first and second color components included in said input image.

10. The information processing apparatus according to claim 9, wherein
said first and second color components are selected to be complementary colors to each other.

11. The information processing apparatus according to claim 9 or 10, further comprising
adjusting means for adjusting chroma of said right-eye image and said left-eye image.

12. The information processing apparatus according to any one of claims 9 to 11, wherein
said target object includes an image having a first image presenting an object from a first point of view mainly in said first color component and a second image representing said object from a second point of view other than said first point of view mainly in said second color component, arranged overlapped on one plane.

13. The information processing apparatus according to any one of claims 1 to 12, configured to be portable.

14. An information processing program executed by a computer having a display unit capable of stereoscopic display, said information processing program adapted to cause said computer to execute:
the first creating step of successively creating an input image by periodically picking-up an image of a target object;
the second creating step of creating a right-eye image and a left-eye image from said input image; and
the display step of presenting stereoscopic display on said display unit, using said right-eye image and said left-eye image.

15. An information processing system including the information processing apparatus according to any one of claims 1 to 13.

16. An information processing method executed by a computer having a display unit capable of stereoscopic display, comprising:
the first creating step of successively creating an input image by periodically picking-up an image of a target object;
the second creating step of creating a right-eye image and a left-eye image from said input image; and
the display step of presenting stereoscopic display on said display unit, using said right-eye image and said left-eye image.
